# EUROPEAN PATENT SPECIFICATION

(11) **EP 3 667 576 B1**
(45) Date of publication and mention of the grant of the patent: **05.03.2025**
(21) Application number: 18211255.7
(22) Date of filing: 10.12.2018
(51) Int. Cl.: G06Q 10/0631, G06Q 50/04

(54) **AUTONOMOUS FLEXIBLE PRODUCTION SYSTEM**
AUTONOMES FLEXIBLES HERSTELLUNGSSYSTEM
SYSTÈME DE PRODUCTION FLEXIBLE AUTONOME

(43) Date of publication of application: 17.06.2020
(73) Proprietor: Siemens Aktiengesellschaft, 80333 München (DE)
(72) Inventor: Grimm, Stephan, 81825 München (DE); Haselböck, Alois, 3392 Schönbühel-Aggsbach (AT); Taupe, Richard, 1160 Wien (AT); Schnittger, Jens, 91475 Lonnerstadt (DE)
(74) Representative: Siemens Patent Attorneys

(56) References cited:
- US-A1- 2007 073 430

## Description

The invention is related to autonomous flexible production systems.

In the vision of Industry 4.0, production units in smart factory environments are equipped with increasing autonomy to flexibly steer high-variant production without human intervention.

However, this also implies that the decisions and actions taken by autonomous systems are not transparent to human users, such as the operators of a manufacturing plant, which leads to a lack of control and trust in autonomous production systems.

Hence, there is a need for making system decisions more transparent, for example providing information why a product has been routed to a specific assembly station for performing the next step in the production process and not to an alternative one.

Especially for the validation of producibility of a new product order, which involves the matching of resource capabilities together with the generation of executable production processes, there is a need for making transparent, why certain resources have or have not been chosen based on their capabilities, and why certain transport routes have or have not been taken concerning the intra plant material flow.

For the case of non-producibility, the plant operator needs to get a detailed information about the reasons, why the product order in question cannot be met by the plant's production capabilities, so that informed decisions for dealing with the problem can be used.

Two types of information are in the context of autonomous production systems with explanation facilities of particular importance, the knowledge about available production alternatives and if producibility is denied in a certain case, the reasons for this.

With respect to production alternatives, the information has to be provided, why only certain possibilities were deemed acceptable by the system and others were discarded.

In detail this functionality will be defined as follows: Based on a first selection of a certain history of executed operations, which includes the operations executed last together with a sequence of predecessor operations, the system provides an overview of all alternative last operations that could have been considered instead of the actually selected and executed one. It will indicate which operations were indeed possible alternatives, if the other last executed operations are held fixed. In doing so, it must check if with this choice, there exists a consistent continuation of the production process not violating any constraint. The system will also indicate why all other alternatives were discarded. This will always be due to a violation of one or more constraints to which the process variants generated in this way are subjected.

Such constraint violations are assigned to one of three categories.

Level 1 violations are of the kind, that for some alternatives there is simply no matching skill offering already at the level of the isolated production operation (local skill matching), independent of refinements of the skill requirements dependent on the ordering of operations. The system will, for every discarded alternative, provide explanatory information about the semantic mismatch between descriptions of skill requirements and skill offers and/or the failure to satisfy constraints on the skill parameters. More precisely, semantic level skill requirement violation means that the resource simply does not have the required skill, independently of the skill parameters.

Example: It is required to drill a hole of 5mm depth and 3mm width into steel. A semantic level skill requirement violation means that the resource (here: machine) simply does not have the skill "drilling". Parameter level skill requirement violation means that the resource has the required skill on a semantic level, but the failure occurs on the parameter level. In the above example, this would mean that the machine cannot drill holes of 5mm depth and 3mm width into steel (it may be able to drill into steel, but not with this combination of depth and width, or it may be able to drill holes of 5mm depth and 3mm width, but not into steel).

Level 2 violation occurs, if local skill matching can be satisfied for the alternative considered, but there is no match at the refined level taking the chosen order of production operations into account.

Level 3 violation means, that level 1 and level 2 are satisfied, but for each solution it turns out that there is no sufficient logistical connectivity between the resource chosen for last operation and the resource chosen for the predecessor operation.

Moreover, the system shall give information for valid alternatives in which way the fulfillment of all constraints was achieved. The system shall also allow for direct queries on resource capabilities by specification of a certain operation and a certain resource assigned to it for execution.

The system checks if the assignment is possible from a local skill matching point of view and if not, in which way skill matching, i.e. the attempt to match the resource skill required against the resource skills offered by the resources of the production system, failed.

In addition and independently of this, information on the maximum sets of constraints that can be fulfilled or the minimum sets of constraints that must be violated shall be provided.

With respect to producibility check failure, e.g. that no production process satisfying all the constraints can be found, the system shall indicate a level of constraint violation, in analogy to the functionality for the analysis of production alternatives.

Level 1 producibility check failures occur, if for some production operations there is no matching skill offering already at the level of the isolated production operation (local skill matching), independent of refinements of the skill requirements dependent on the ordering of operations. The system will indicate the operations concerned together with explanatory information about the semantic mismatch between descriptions of skill requirements and skill offers.

Level 2 producibility check failures appear, if local skill matching can be satisfied, but there is no match at the refined level taking the order of production operations into account, and

Level 3 producibility check failure means, that level 1 and level 2 are satisfied, but for each solution it turns out that there is no sufficient logistical connectivity between the machines involved.

Document US2007073430 discloses a method of optimally scheduling, in near real-time, work units for processing on processing stations in a processing system, while accounting for constraints such as processing station qualifications by work unit type and service type, and to meet certain business objectives such as cycle time and demand targets.

It is the objective of the invention to provide an autonomous production system, which provides enhanced information about system decisions.

The objective can be achieved by a method as defined in the sole independent claim 1.

Preferred embodiments of the invention are shown in the dependent claims.

The invention is explained below with reference to an exemplary embodiment shown in the drawings.
Fig. 1 shows an execution graph,
Fig. 2 a flowchart to functionality scenarios
Fig. 3 a schematic representation of a producibility computation software

The present invention is related to autonomous flexible production systems, controlled by a manufacturing execution system, with a given set of production machines. Material flows between the machines are carried out by a transport system with variable means of transport as conveyor belt, AGV, fork lift etc. Machines can be flexibly connected/disconnected to the production system, but for a given scheduling /ad hoc assignment horizon for a set of production orders (order stack) the machine configuration is assumed to be constant. The machine park shall be capable to produce an entire family of products/product variants by making flexible use of the machine capabilities. The production process shall be modeled, inside a PLM tool, in terms of a set of production operations with associated materials, i.e., elements of Bill of Process (BoP) and Bill of Materials (BoM).

According to the invention, a system with the setup as described in the forgoing is provided with means for finding all possible production process variants for a given product that are compatible with the restrictions on the ordering of production operations and involve machines with the right capabilities and appropriate logistical connections between them; means for characterizing process variants by a chosen allowed ordering of operations and by an allowed assignment of machines to the operations; means for finding an optimized schedule for the order stack by selecting one process for each order in the stack and setting up a time schedule for all these processes that is optimal with respect to a certain evaluation function, means for presenting all possible production process variants for a given product or if there has been no possible production process been found, means for presenting the possible reasons for unproducibility.

Alternatively, in an ad hoc assignment approach, first one needs to guarantee that decisions taken never lead to a situation where no continuation of the process is possible. Then, among the time-local decisions permissible by this criterion, local optimization criteria can be applied as usual in an ad hoc approach.

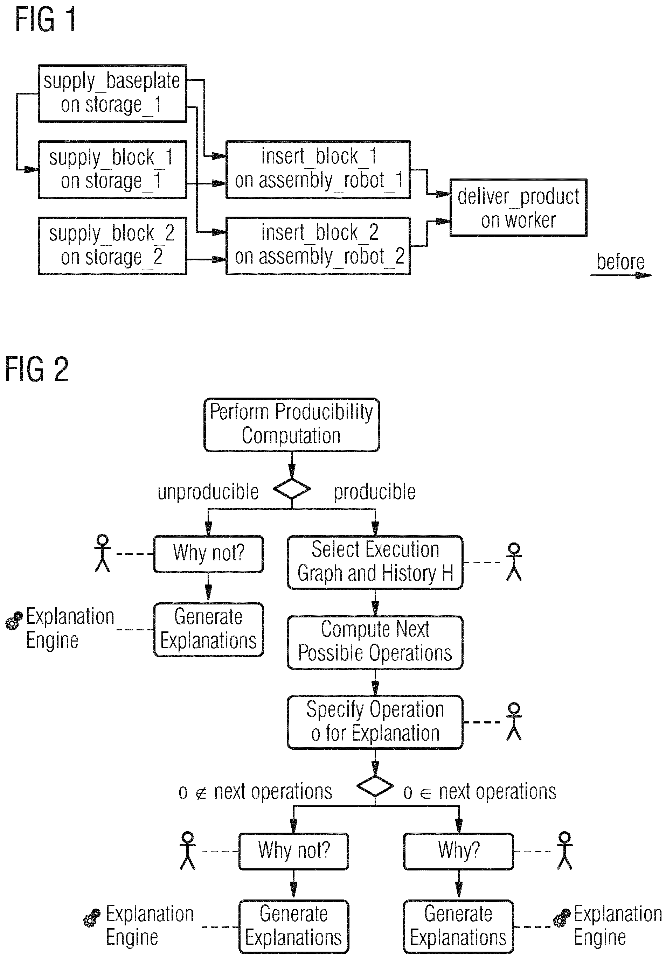

The present application does not deal with the scheduling or ad hoc assignment problem, but only with the preceding step of identifying all possible production process variants, and present them in so called execution graphs as shown in Fig. 1.

Execution graphs are generated as a solution of a number of constraints, namely Skill matching constraints, Ordering constraints and Logistics constraints.

Skill matching constraints depend on the so-called skill requirements, formalized definitions of the machine capabilities required for each execution in a certain production operation. Skill requirements are defined in terms of a skill ontology and come with a set of skill requirement parameters, such as for example geometric dimensions of a feature to be created by a production operation. Skill requirements needed to be compared (matched) with machine self-descriptions of their capabilities, the so-called skill offerings. They are formalized in terms of the same skill ontology.

Ordering constraints are related to limitations in the orderings. Although production operations generally enjoy some degree of flexibility regarding their possible orderings, there are limitations described in terms of the ordering constraints (e.g. if operation A precedes operation B, then operation C must also precede operation B; else, both must follow after operation B).

Logistics constraints describe the possibility to transport, using the available transport systems, material output from one machine to the machine carrying out the next operation,

Before production can start, there must be determined possible solutions to the above constraints, and of course, it must be checked if any such solution exists at all. This is combined in the so-called Producibility Check.

According to the invention, the results of a producibility computation have to be presented in a manner, that the reasons for the decisions can be controlled by a supervising system.

This result of a producibility computation is a (possibly empty) set of execution graphs. If this set is empty, the product is said to be unproducible w.r.t. a given production system, otherwise the product is said to be producible w.r.t. a given production system.

An execution graph now represents a workflow of operations and is in its simplest and most general form a tuple **(***a**ssignedResource, before),*** where
- O is the set of all operations to produce a given product,
- R is the set of all resources of a given production system,
- ***assignedResource*: *O*** → *R* is a function describing for each operation on which resource it is assigned to be executed, and
- ***before* ⊆ *OxO*** is a relation; each element (op1,op2) describes that operation op1 must be finished before operation op2 starts. This relation represents a partial, transitive ordering on the operations; parallel operations are allowed.

### Example:

Let the set of operations be:
O = {supply_baseplate, supply_block_1, supply_block_2, insert_block_1, insert_block_2, deliver_product}

Let the set of resources be: R={storage_1, storage_2, assembly_robot_1, assembly_robot_2, worker}

Example of an execution graph:
assignedResource = {(supply_baseplate, storage_1), (supply_block_1, storage_1),
(supply_block_2, storage_2),
(insert_block_1, assembly_robot_1),
(insert_block_2, assembly_robot_2),
(deliver_product, worker)}
before = {(supply_baseplate, supply_block_1),
(supply_baseplate, insert_block_1),
(supply_baseplate, insert_block_2),
(supply_block_1, insert_block_1),
(supply_block_2, insert_block_2),
(insert_block_1, deliver_product),
(insert_block_2, deliver_product)}

Fig. 1 shows this execution graph. The nodes represent the resource assignments, the edges are the before relationships.

Apart from explaining unproducibility of an inconsistent problem, a request for an explanation is based on execution graphs computed by the producibility computation software. Let H (H stands for "history") be the sequence of the first n (n >= 0) production operations of an execution graph. H represents the set of operations that have already been executed. A standard function of a producibility computation software component is to provide the comprehensive set of possible next operation-resource assignments, given H. This function is called getNextOperations(). The resulting set of operationresource assignments represent all valid production continuations. The supervisor can now request one of the following explanations:
- Let assignedResource(o)=r be part of the possible next operations. Why?
- Let assignedResource(o)=r not be part of the possible next operations. Why not?

### Example:

Using the execution graph from the example above (see Fig. 1), let H be:

```
     H = {assignedResource(supply_baseplate)=storage_1,
          assignedResource(supply_block_1)=storage_1,
          assignedResource(supply_block_2)=storage_2}
          Valid continuations are:
     getNextOperations() = { (insert_block_1, assem-
                       bly_robot_1),
                         (insert_block_2, assembly_robot_2)}
                         
```

Now the supervisor can, e.g., ask the following questions:
- Why is assignedResource(insert_block_1)=assembly_robot_1 a valid continuation?
- Why is assignedResource(insert_block_1)=assembly_robot_2 not a valid continuation?
- Why is assignedResource(deliver_product)=worker not a valid continuation?

The different explanation scenarios are depicted in the diagram in Fig 2. The result of the producibility computation is either "unproducible", or - if producible - a set of valid execution graphs. If producibility check fails, explanation texts for all possible reasons of inconsistencies are created. If producibility check succeeds, the user can select one of the resulting execution graphs for production or production simulation along with a history H (the first part of the selected execution graph). For that input (execution graph and H), all possible next operations are computed. Now the supervisor either selects one of them and requests a why-explanation, or he specifies an operation-resource assignment that is not a valid continuation and asks for a why-not explanation.

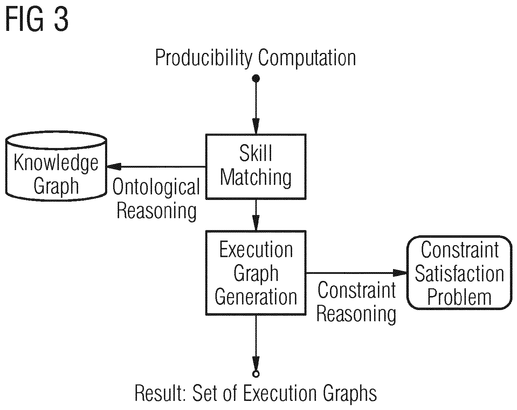

The producibility computation software consists of two main parts as shown in Fig.3, Skill Matching and Execution Graph Generation.

Skill matching computes for the required skill of each operation of the Bill of Process, the set of resources along with their offered skills that are capable to execute the operation. Skill matching is typically based on ontological reasoning in a Knowledge Graph. Execution graph generation uses the results of skill matching and computes some or all possible execution graphs for a given bill of materials/bill of process and production system.

Execution graph generation is a combinatorial problem and typically represented and solved by a constraint-based software system.

To realize the different explanation functions as depicted in Fig. 2, Skill Matching and Execution Graph Generation provide the following basic explanation functions:
a. Skill Matching:
   o case I: unproducible
      - For a specific operation op and any resource r, explain why op has not been assigned to r.
      - Call why-not-skill-match (S_{req}, S_{offered}) for the skill requirement S_{req} associated to op and the skill offer S_{offered} associated to r, for a nonmatching pair S_{req}, S_{offered}
   o case II: producible, unscheduled operation
      - For a specific operation op not offered by a call to getNextOperations() at a certain point and any known resource r, explain why op has not been assigned to r.
      - Call why-not-skill-match (S_{req}, S_{offered}) for the skill requirement S_{req} associated to op and the skill offer S_{offered} associated to r, for a nonmatching pair S_{req}, S_{offered}
   o case III: producible, scheduled operation
      - For a specific operation op offered by a call to getNextOperations() at a certain point and any of the resources assigned to op, explain why op has been assigned to r.
      - Call why-skill-match (S_{req}, S_{offered}) for the skill requirement S_{req} associated to op and the skill offer S_{offered} associated to r, for a matching pair S_{req}, offered
b. Execution Graph Generation:
   o case I: unproducible
      - Explain why the product cannot be produced in the given factory. While the focus of Skill Matching lies on explaining local dependencies (why doesn't resource r match operation op?), the focus here lies on combinations of constraints and/or non-local constraints for explaining an unsolvable problem.
      - why-unproducible ()
   o case II: producible, unscheduled operation
      - Explain why the given operation op on a given resource r (optional) is not a valid production continuation, given production history H.
      - why-not-next-operation(op, r, H) op ... an operation of the product r ... a resource of the production system; this parameter is optional; if not present, the user wants to ask why operation o is not a possible continuation at all
         H ... a production history; assignedResource(op)=r is not part of getNextOperations() w.r.t. H
   o case III: producible, scheduled operation
      - Explain why the given operation op on a given resource r is a valid production continuation, given production history H.
      - why-next-operation(op, r, H)
         op ... an operation of the product r ... a resource of the production system; this parameter is optional; if not present, the user wants to ask why operation o is not a possible continuation at all
         H ... a production history; assignedResource(o)=r is member of getNextOperations()w.r.t. H

The details of these explanation functions are described in the following:
Explanation Functionality of Skill Matching:
The flexible production system of the present example uses a skill matching mechanism based on reasoning about ontological descriptions of resource capabilities.

Such descriptions are called semantic skill descriptions and the ontology language OWL is used to formulate machine capabilities at a symbolic level. An example for a semantic skill description in OWL (description logic syntax) is the following:
S = Drilling Π ∃ involvesMaterial.MetalBlock) Π ∃ depth.<7) "S describes drilling into metal blocks with max. depth of 7" It represents the capability of drilling a hole into metal blocks with a maximum depth of 7mm. Semantic skill descriptions are formulated in relation to a background ontology K (=knowledge), which defines the semantic vocabulary used in the descriptions (e.g. Drilling as a subclass of Machining, etc.).

For the skill matching mechanism, semantic skill descriptions in two different roles are considered: skill offers and skill requirements. A skill requirement expresses the need for a specific capability, whereas a skill offer expresses the supply of a capability. It is assumed that any operation o in K is associated with a skill requirement description S_{req}, whereas each resource r in R is associated with a skill offer description S_{offered} - these can be interpreted as the capability required for a production step and as the capability offered by a resource (e.g. a machine).

The skill matching mechanism then is used to test compatibility between semantic skill descriptions for skill offers S_{offered} and skill requirements S_{req}, using an OWL reasoner. In particular, it tests if the conjunction2 of two descriptions S_{req} and S_{offered} is (logically) satisfiable with respect to the ontology K, which means that all restrictions in both semantic skill descriptions can be jointly fulfilled. Formally, this test can have the following two results:
a. S_{req} Π S_{offered} is satisfiable w.r.t. K : this means that the operation o associated with S_{req} is compatible with the resource r associated with S_{offered}.
b. S_{req} Π S_{offered} is unsatisfiable w.r.t. K : this means that the operation o associated with S_{req} is incompatible with the resource r associated with S_{offered}, i.e. their restrictions cannot be jointly fulfilled.

To compute explanations for skill matching results, we utilize the well established mechanism of OWL justifications for explanations of OWL inferences. An OWL justification J is a minimal set of OWL axioms3 (a subset of the ontology) that jointly lead to a given entailment α, i.e. a specific axiom that logically follows from the ontology, formally J ⊨ α4.

It identifies those axioms in an ontology that contribute to the entailment, and thus, can be used to produce an explanation for the entailment, in our case for skill matching.

Our idea for explaining the skill matching results is to first identify an entailment that reflects a matching or non-matching situation involving S_{req} and S_{offered}, and then to compute one or several justifications for this entailment. Explanations in form of messages presented to the plant operator can then be extracted from the axioms in the justification, which contain exactly that information that lead to the respective match or non-match.

For the cases of explanation above, this mechanism of computing justifications is employed in two different situations: a) for explaining why a match between S_{req} and S_{offered} holds, and b) for explaining why a match between S_{req} and S_{offered} does not hold (see also the calls of why- and why-not-related functions).

Case a) is the simpler case, since a non-match is already reflected by an entailment, namely K ⊨ S_{req} Π S_{offered} ⊆ ⊥, that can directly be used for computing justifications. Case b), on the other hand, is reflected by the ontology K not entailing any specific axiom. Here, at first an entailment that captures the situation of a match as good as possible is constructed for then computing justifications based on it. The procedural steps to be taken for generating explanations in the two cases are the following:
- Explaining non-matches (why are S_{req} and S_{offered} incompatible) why-not-skill-match()
   - compute a justification J for the entailment K ⊨ S_{req} Π S_{offered} ⊆ ⊥ since S_{req} and S_{offered} are two conflicting skill descriptions, J contains exactly those axioms that contribute to the logical contradiction that emerges from combining the incompatible restrictions from S_{req} and So with respect to the background knowledge in the ontology K
   - extract/highlight "interesting" parts in J to produce an actual explanatory text to be presented to the user; use explanatory text fragments that annotate the respective OWL axioms
- Explaining matches: (why are S_{req} and S_{offered} compatible) why-skill-match()
   - find a complex OWL class expression S'_{offered}, such that K ⊨ S_{req} ⊆S'_{offered} by syntactically reducing S° in a minimal way, loosing as less as possible semantic information5, so that K ⊨ S_{offered} ⊆S'_{offered}
   - compute a justification J for the OWL inference K ⊨ S_{req} ⊆ S'offered since S_{req} is a subclass of S'offered, J contains exactly those axioms that contribute to the logical entailment of the relevant compatible restrictions of both S_{req} and S_{offered}. And since S'_{offered} has been derived from S_{offered} in a way of minimal reduction, only those restrictions from S_{offered} are excluded from the explanation that do not contribute to the match
   - extract/highlight "interesting" parts in J to produce an actual explanatory text to be presented to the user; use explanatory text fragments that annotate the respective OWL axioms

Consider the following examples of explaining matches as well as non-matches:
Assume that an ontology K contains background information from a domain like assembly in manufacturing and contains statements like the following.
K = { RoofBlock ⊆ PlasticBlock "any roof block is made of plastic",
PlasticBlock Π GlassBlock ⊆ ⊥ "plastic blocks and glass blocks are different things"
Inserting ⊆ Joining "inserting is a special form of joining", , ...}

Furthermore, assume the following semantic skill descriptions expressed as OWL class expressions (in logical syntax) for a skill requirement Sr from an operation and two skill offers S^{o1} and S^{o2} from respective resources6:
S_{req} = Joining Π ∃involvesMaterial. (RoofBlock Π ∃width.<5) "Sreq requires joining of roof blocks with max. width of 5"
S_{offA} = Inserting Π ∃ involvesMaterial. (GlassBlock Π ∃ width. <7) "S_{offA} offers Inserting of glass blocks w. max. width of 7"
S_{offB} = Inserting Π ∃ involvesMaterial. ( Block Π ∃ width.<10) "S_{offB} offers inserting of blocks with max. width of 10"

Applying the matchmaking mechanism in the producibility check results in a negative match between S_{req} and S_{offA} and a positive match between S_{req} and S_{offB}. The following explanations are computed, illustrating the two cases of why-not and why explanations for skill matching:
a. explaining negative match between S_{req} and S_{offA}:
   - entailment: K ⊨ S_{req} Π S_{offA} ⊆ ⊥ "S_{req} and S_{offA} cannot be conjoint without contradiction"
   - justification: J = {S_{req} ⊆∃ involves Material. (RoofBlock) "Sr asks for roof blocks" S_{offA} ⊆ ∃ involvesMaterial. (GlassBlock) "S_{offA} offers glass blocks",
      RoofBlock ⊆ PlasticBlock "any roof block is a plastic block",
      PlasticBlock Π GlassBlock ⊆ ⊥ "plastic blocks and glass blocks are different things"}
b. explaining positive match between S_{req} and S_{offB}:
   - concept weakening: S'offB= Joining7 Π ∃ involvesMaterial. ( Block Π □width.<10)
   - entailment: K ⊨ S_{req} ⊆ S'_{offB}, "S_{req} is a special case of S'_{offB}"
   - justification: J = {S_{req} ⊆ Joining "S_{req} asks for joining",
      S'_{offB} ⊆ Joining "S_{req} asks for joining",
      S_{req} ⊆ ∃involvesMat. (RoofBlock Π □width.<5) "Sreq offers glass blocks of max. width 10",
      S'_{offB} ⊆ ∃involvesMaterial. (Block Π □width.<10) "S'_{offB} offers glass blocks of max. width 10",
      RoofBlock ⊆ PlasticBlock ⊆ Block "any roof block is a plastic block, which is a block",
      PlasticBlock Π GlassBlock ⊆ ⊥ "plastic blocks and glass blocks are different things"}

The example shows how the texts associated with the axioms (statements) in the ontology can be used to contribute to an explanation that can be presented to the supervisor.

They summarize the reasoning behind a positive match or negative match. These texts can either be stored together with the axioms, using the OWL annotation mechanism, or they can be automatically generated from the axioms using NLP techniques.

Explanation Functionality of Execution Graph Generation:
For the generation of execution graphs the producibility check problem is formulated as a constraint satisfaction problem CSP which consists of variables, their domains and constraints.

A solution to a constraint satisfaction problem (CSP) is an assignment of each variable to one element of its domain such that all constraints are satisfied. A CSP is called consistent or satisfiable if it has a solution and inconsistent or unsatisfiable otherwise. A subset of the variables consists of so-called output variables, whose value assignment in a solution directly encodes an execution graph. Let O be the set of BoP (Bill of Process) operations, let R be the set of all resources (cyber-physical production units) in the factory.

The output variables corresponding to the execution graph elements assignedResource(op) and before(op1, op2)are for each op, op1, op2 ∈ O:
- v_assignedResource[op] ∈ R
- v_before[op1, op2] ∈ {true, false}

There are many different ways how to encode an execution graph problem as a CSP. The invention is not restricted to the encoding used in this example.

Constraints are logical relationships on subsets of the variables. They represent restrictions on what a valid execution graph is and can therefore be used for explaining assignment and sequencing decisions for why and why-not questions.

For the description of the explanation functionality w.r.t. execution graph generation a few definitions are needed:
- The function ***out_vars*(*CSP*)** returns the set of all output variables of the producibility computation CSP.
- The function ***constraints*** (*ν*) returns the set of all constraints that act on variable v. The function can be extended for more than one variable: ***constraints*** ({*v*1, *v*2, *...* }) = U_{*v*∈{*v*1,*v*2,...}} ***constraints** (v).* Therefore, the function call ***constraints* (*out_vars* (*CSP*)**) delivers all constraints acting on output variables of CSP.
- The function ***expl*(*c*)** for a constraint c creates an explanation text that is derived from a textual annotation of the constraint c specified by the domain engineer together with the CSP modeller. It is a compact, high-level description of the meaning of the constraint and can contain placeholders for explanations of sub-expressions or constant values. Example: "If blocks are already inserted into positions 1 and 3 of a baseplate, only resources with the skill 'can insert into gap' are able to insert a block into position 2 of the baseplate".

### Explanation Function why-unproducible():

If the producibility computation determines unproducibility, the underlying CSP has no solution. In this case it is a non-trivial problem to determine the set of constraints that are responsible for the inconsistency. Put simply, a set of constraints is responsible for inconsistency if the CSP becomes consistent when these constraints are removed from it. The research area of model-based diagnosis [6-8] deals with this issue and calls such a set a diagnosis. Related to this is the computation of (minimum) unsatisfiable cores [9] in SAT, which is a special case of CSP.

For the computation of diagnoses we refer to previous work and build on its results: For a diagnosis D, which is a set of constraints containing output variables, expl(D) is returned, i.e. the explanations for the constraints contained by the diagnosis. This set of explanations can be enriched by known techniques, i.e. by heuristic methods that specifically explain typical causes of failure of a producibility check.

### Explanation Function why-not-next-operation(o, r, H):

If operation o executed on resource r is not a valid next step after history H, the CSP underlying this specific producibility problem is inconsistent and a subset of the constraints is violated. This specific CSP can be constructed by extending the original producibility CSP with constraints that fixate the variable v_assignedResource[o] to r, variables encoding the history to H, and v_before(o, o') = true for all operations o' ∉ operations(H) ∪ {o}.

Therefore this specific CSP can be constructed and then continued as in the why-unproducible() case, i.e. a diagnosis D ⊆ C is computed and expl(D) returned.

The above algorithm in pseudocode:
- Fixate H
- Fixate v_assignedResource[o] = r
   - problem is unproducible now (per definition)
- Call explanation function why-unproducible()

### Explanation Function why-next-operation(o, r, H)

If operation o executed on resource r is a valid next step after history H, the CSP underlying this specific producibility problem is consistent and all constraints are satisfied. This specific CSP can be constructed by extending the original producibility CSP with constraints that fixate the variable v_assignedResource[o] to r, variables encoding the history to H, and v_before(o, o') = true for all operations o' ∉ operations (H) ∪ {o}.

The approach to explain why this problem is consistent, consists of extracting a subset of the constraints that is relevant for the user and then computing explanation strings for this subset. As to which subset is relevant, all constraints are regarded that involve the variable v_assignedResource[o] as relevant for the assignment of o to r. It may be assumed that quantified expressions are already flattened (e.g., universally quantified constraints are split into a set of individual constraints interpreted in conjunction) and that negation occurs up to a certain level of nesting.

The above algorithm in pseudocode:
- Fixate H
- Fixate v_assignedResource[o] = r
- Return expl(constraints(v_assignedResource[o]))

### Producing combined Explanations for Producibility:

Having computed explanatory texts based on the two technologies of ontology reasoning and constraint solving, there is finally the need to combine the results to form a joint explanation that can be presented to the supervisor, exposing all reasoning for or against producibility at once. According to the invention explanations from both technologies come in the form of explanatory text fragments and are simply combined in a union of all text fragments, each one giving a reason for some why or why-not case.

With respect to the cases shown in Fig. 2:
- Case I: unproducible
   Concatenate explanations
   a. Skill Matching: why-not-skill-match (S_{req}, S_{offered}) for the skill requirements S_{req} for all operations with non-matching resources with skill offering S_{offered}
   b. Execution Graph Generator: why-unproducible()
- Case II: producible, unscheduled operation
   Concatenate explanations
   a. Skill Matching: why-not-skill-match (S_{req}, S_{offered}) for the skill requirements S_{req} for all operations with non-matching resources with skill offering S_{offered}
   b. Execution Graph Generator: why-not-next-operation(o, r, H)
- Case III: producible, scheduled operation
   Concatenate explanations
   a. Skill Matching: why-skill-match (S_{req}, S_{offered}) for the skill requirements S_{req} for operation o and skill offering of resource r
   b. Execution Graph Generator: why-next-operation(o, r, H)

With the help of the above functionality, the task of complete information can be fulfilled, as follows:
The skill non-matching explanation why-not-skill-match(S_{req}, S_{offered}) contains the information needed for characterizing a level 1 constraint violation and also a level 2 constraint violation , both concerned with skill matching- the only difference is that for a level 1 constraint violation, the skill matching analysis is carried out before any specific ordering of operations is considered.

The skill requirements are then generally less strict. If a violation occurs already at this level, there is no need for the user to look any deeper. On the other hand, if a specific ordering of operations is considered before skill matching is applied, this leads to a refinement of the skill requirements for a solution may no longer exist even though it did exist on the first level.

The explanation why-not-next-operation(o, r, H)contains the information needed for characterizing a level 3 constraint violation (lack of logistical connection between resources chosen).

With the help of the latter explanation, the system could of course also provide a "level 0" constraint violation, indicating that there is simply no allowed ordering of operations, independently of skill matching and independently of logistical constraints. Of course, this would correspond to a faulty process design. The level 0 violation display may be useful as a checking function during process design, however.

It has to be noted, that for the realization of the invention one or more computers will be used for performing the described operations, calculations and means.

## Claims

1. Autonomous, flexible production system with a set of production machines and a transportation system for carrying out the material flows between the machines in which the production machines can be flexibly connected/disconnected to a production process, **characterised in that** said system comprises
- means for finding all possible production process variants for a given product that are compatible with the restrictions on the ordering of production operations and involve machines with the right capabilities and appropriate logistical connections between them;
- means for characterizing process variants by a chosen allowed ordering of operations and by an allowed assignment of machines to the operations;
- means for finding an optimized schedule for the order stack by selecting one process for each order in the stack and setting up a time schedule for all these processes that is optimal with respect to a certain evaluation function,
- means for presenting all possible production process variants for a given product or
- if there has been no possible production process been found,
- means for presenting the possible reasons for unproducibility.

2. Autonomous, flexible production system according to claim 1, wherein, for all possible production process variants for a given product execution graphs are generated.

## Patentansprüche

1. Autonomes, flexibles Produktionssystem mit einer Reihe von Produktionsmaschinen und einem Transportsystem zum Durchführen der Materialflüsse zwischen den Maschinen, bei dem die Produktionsmaschinen flexibel an einen Produktionsprozess angebunden/davon getrennt werden können, **dadurch gekennzeichnet, dass** das System Folgendes umfasst:
- Mittel zum Suchen nach allen möglichen Produktionsprozessvarianten für ein gegebenes Produkt, die mit den Einschränkungen für die Reihenfolge von Produktionsabläufen kompatibel sind und Maschinen mit den richtigen Einsatzmöglichkeiten und passende logistische Verbindungen zwischen ihnen betreffen,
- Mittel zum Beschreiben von Prozessvarianten durch eine gewählte zulässige Reihenfolge von Abläufen und durch eine zulässige Zuordnung von Maschinen zu den Abläufen,
- Mittel zum Suchen eines optimierten Ablaufplans für den Auftragsstapel durch Auswählen eines Prozesses für jeden Auftrag im Stapel und Einrichten eines Zeitplans für all diese Prozesse, der im Hinblick auf eine bestimmte Bewertungsfunktion optimal ist,
- Mittel zum Präsentieren aller möglichen Produktionsprozessvarianten für ein gegebenes Produkt oder,
- wenn kein möglicher Produktionsprozess gefunden wurde,
- Mittel zum Präsentieren der möglichen Gründe für eine fehlende Machbarkeit.

2. Autonomes, flexibles Produktionssystem nach Anspruch 1, wobei für alle möglichen Produktionsprozessvarianten für ein gegebenes Produkt Ausführungsgraphen erstellt werden.

## Revendications

1. Système de production flexible et autonome avec un ensemble de machines de production et un système de transport permettant de réaliser les écoulements de matériau entre les machines, dans lequel les machines de production peuvent être connectées/déconnectées de manière flexible à un processus de production,
**caractérisé en ce que** ledit système comprend :
- des moyens permettant de trouver toutes les variantes de processus de production possibles pour un produit donné qui sont compatibles avec les restrictions sur la commande d'opérations de production et d'impliquer des machines dotées des bonnes capacités et des connexions logistiques appropriées entre elles ;
- des moyens permettant de caractériser des variantes de processus par un ordre d'opérations autorisé choisi et par une affectation autorisée de machines aux opérations ;
- des moyens permettant de trouver un programme optimisé pour la pile de commandes en sélectionnant un processus pour chaque commande dans la pile et en établissant un programme dans le temps pour tous ces processus qui soit optimal par rapport à une certaine fonction d'évaluation ;
- des moyens permettant de présenter toutes les variantes de processus de production possibles pour un produit donné ; ou
- si aucun processus de production possible n'a été trouvé ;
- des moyens permettant de présenter les raisons possibles d'absence de productibilité.

2. Système de production flexible et autonome selon la revendication 1, dans lequel, pour toutes les variantes de processus de production possibles pour l'exécution d'un produit donné, des graphiques sont générés.
